# EUROPEAN PATENT APPLICATION

(11) **EP 2 198 701 A1**
(43) Date of publication of application: **23.06.2010**
(21) Application number: 09179703.5
(22) Date of filing: 17.12.2009
(51) Int. Cl.: A01K 1/00, F24F 7/04, F24F 13/02

(54) **Air inlet duct especially for use in cow-houses**

(30) Priority: 17.12.2008 NL 2002335
(71) Applicant: Jansen, Wil, 5737 PT Lieshout (NL)
(72) Inventor: Jansen, Wil, 5737 PT Lieshout (NL)
(74) Representative: Verhees, Godefridus Josephus Maria

(57) **Abstract**

An air intake channel (1) is comprised of an elongated chute (3) open at the top and having an air transparent layer (5) which is connected to the chute and closes off the top side of the chute. The air intake channel (1) is located at a distance from the floor (15) in a section (13) of a shed (14). There is a walkway (17) in this section with a space (19) for the animals on either side of the walkway. One of the air intake channels (1) is located over each space.

In the place of the walkway (17) the temperature is lower than in the spaces (19) on either side of the walkway. In these spaces (19) the warm air rises and flows around the air intake channel (1) while colder fresh air is taken along. This colder fresh air mixes with the warmer air and comes down on the walkway (17) after which it flows over the floor (15) into the spaces (19) where the animals are located.

## Description

### Field of the invention.

The invention relates to an air intake channel more particularly for use in a cattle shed, such as a pigsty.

### State of the art.

Air intake channels are generally known and are used among other things for supplying fresh air, moisture and/or oxygen to the cattle shed.

### Summary of the invention.

It is an object of the invention to provide an air intake channel that when used in a cattle shed causes an improved airflow to occur in the cattle shed. For this purpose the air intake channel according to the invention is **characterised in that** the air intake channel comprises an elongated chute open at the top, of which the bottom and two side walls are closed, as well as an air transparent layer which is connected to the chute and closes off the open top side of the chute. An air transparent layer is understood to mean any layer that is air transparent such as for example a perforated foil or a cloth. Air warmed by the animals will rise and flow along the air intake channel so that a slight underpressure over the air intake channel is formed so that fresh air is sucked in through the air transparent layer and this fresh air can mix very well with the rising warm air.

For improving the airflow along the air intake channel, an embodiment of the air intake channel according to the invention is **characterised in that** the chute further comprises two outwardly protruding flaps which are each connected with a longitudinal side to a free edge of one of the side walls of the chute. The warm rising air flows along the side walls of the air intake channel and is led outside via the top side. As a result, a larger space is created so that the fresh air can mix better with the rising warm air.

Preferably a heating and/or cooling element is positioned in the chute so that the fresh air coming from outside can be preheated (in winter) or cooled down (in summer).

The invention also relates to a cattle shed provided with an air intake channel according to the invention. With respect to the cattle shed, the invention is **characterised in that** the air intake channel is located at a distance from the floor in the shed while the air transparent layer is positioned at the top side of the air intake channel.

An embodiment of the shed according to the invention is **characterised in that** the shed comprises a plurality of sections which each have a walkway with on at least one side thereof a space reserved for the animals, with the air intake channel extending over this animal space and being connected with at least one end to the air outside the section for the supply of fresh air. The fresh air can then be blown and/or sucked into the air intake channel by means of one or a plurality of fans.

In the place where the walkway is situated the temperature is lower than in the space where the animals are located. In this space the warm air will rise and flow around the air intake channel while colder fresh air is sucked along. This colder air mixes with the warmer air and comes down in the place of the walkway after which it flows over the floor into the space where the animals are located.

### Brief description of the drawings.

The invention will be further described below in more detail with reference to an embodiment of the air intake channel according to the invention and represented in the drawing figures, in which:
Fig. 1 shows a cross-sectional view of an embodiment of the air intake channel according to the invention;
Fig. 2 shows a cross-sectional view of a section of a cattle shed comprising the air intake channels shown in Fig. 1; and
Fig. 3 shows a top plan view of the section shown in Fig. 2 with the roof removed.

### Detailed description of the drawings.

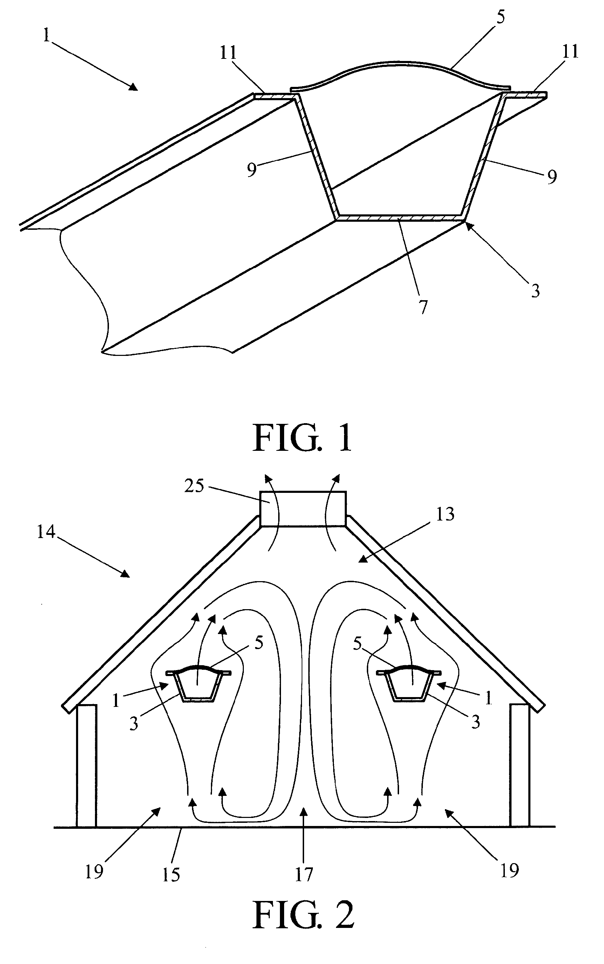

Fig. 1 shows a cross-sectional view of an embodiment of the air intake channel 1 according to the invention. The air intake channel 1 is comprised of an elongated chute 3 open at the top and having an air transparent layer 5 which is connected to the chute and closes off the top side of the chute. The chute 3 has a closed bottom 7 and two closed side walls 9 with flaps 11 extending outwardly and being fixed to the upper free edges of the side walls.

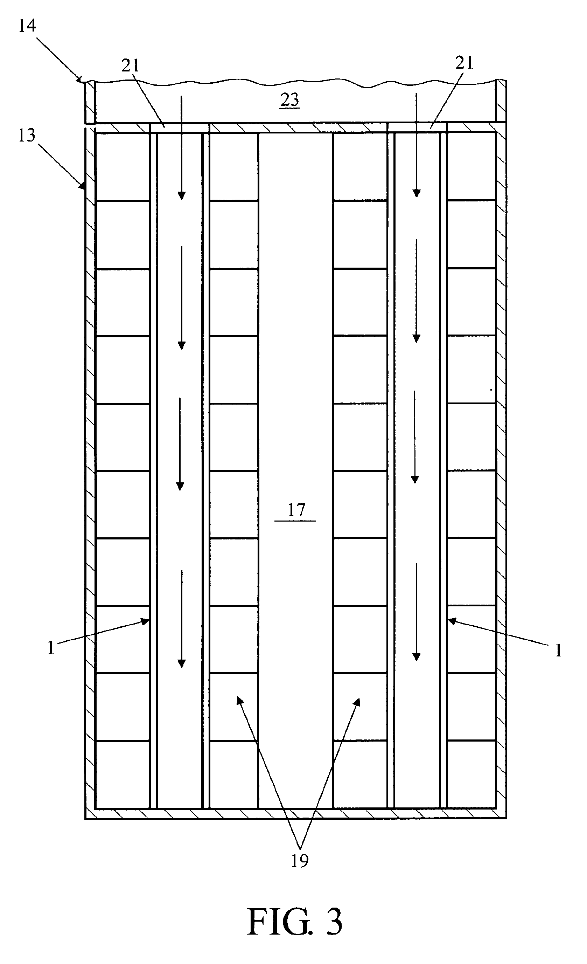

Figs. 2 and 3 show a section 13 of a shed 14 provided with two air intake channels I in cross-sectional view and top plan view respectively with the roof removed. The air intake channel 1 is positioned at a distance from the floor 15 of the shed with the layer 5 pointing upwards (see Fig. 2). In longitudinal direction of the section 13 there is a walkway 17 which is situated in the middle of the cattle shed. On either side of the walkway there is a space 19 for the animals. Over each space 19 is located one of the air intake channels 1 extending in longitudinal direction of the section.

The two air intake channels 1 are each connected with one end to an air preparation space 23 in the shed 14 via an air intake grid 21. Fresh air from outside the section 13 is sucked in through these air intake channels. Fans 25 (see Fig. 2) are installed in the roof of the cattle shed, which blow out the stale air from the section, so that fresh air is sucked in through the air intake grids 21 in the air intake channels 1.

In the place of the walkway 17 the temperature is lower than in the spaces 19 on either side of the walkway where the animals are located. In these spaces 19 the warm air rises and flows around the air intake channel 1 while colder fresh air is sucked along. This colder outside air mixes with the warmer air and comes down in the place of the walkway 17 after which it flows over the floor 15 into the spaces 19 where the animals are located.

Albeit the invention has been described in the foregoing with reference to the drawing Figures, it should be pointed out that the invention is not by any manner or means restricted to the embodiments shown in the drawing Figures. The invention also extends over any embodiments deviating from the embodiments shown in the drawing Figures within the spirit and scope defined by the claims. For example heating and/or cooling elements may be positioned in the chute so that the fresh air taken in from outside the section can be preheated (in winter) or cooled down (in summer) by them. Furthermore, the chute may include a system for supply of oxygen and/or moisture.

## Claims

1. An air intake channel more particularly for use in a cattle shed, **characterised in that** the air intake channel comprises an elongated chute open at the top, of which the bottom and two side walls are closed, as well as an air transparent layer which is connected to the chute and closes off the open top side of the chute.

2. An air intake channel as claimed in claim 1, **characterised in that** the chute further comprises two outwardly protruding flaps which are each connected with a longitudinal side to a free edge of one of the side walls of the chute.

3. An air intake channel as claimed in claim 1 or 2, **characterised in that** a heating and/or cooling element is positioned in the chute.

4. A cattle shed provided with an air intake channel as claimed in any one of the preceding claims, which air intake channel is located at a distance from the floor in the shed with the air transparent layer being positioned at the top side of the air intake channel.

5. A shed as claimed in claim 4, **characterised in that** the shed comprises a plurality of sections which each have a walkway with on at least one side thereof a space reserved for the animals, with the air intake channel extending over this animal space and being in connection with at least one end to the air outside the section for supply of fresh air.
